# EUROPEAN PATENT APPLICATION

(11) **EP 3 800 489 A1**
(43) Date of publication of application: **07.04.2021**
(21) Application number: 20020453.5
(22) Date of filing: 02.10.2020
(51) Int. Cl.: G02B 5/08, G01S 13/86, G01S 13/88, G01S 17/86, G01V 8/00, G02B 5/26, G02F 1/166, H01Q 1/27, H01Q 15/14, H01Q 1/42

(54) **MULTILAYER DEVICE FOR REFLECTING ELECTROMAGNETIC RADIATION IN OPTICAL AND MICROWAVE WAVELENGTHS**

(30) Priority: 03.10.2019 SE 1930307
(71) Applicant: SafeRadar Research Sweden AB, 439 52 Åsa (SE)
(72) Inventor: Pettersson, Lars, 602 09 Norrköping (SE); Pernståhl, Thomas, 439 52 Åsa (SE)
(74) Representative: Basck Ltd

(57) **Abstract**

There is disclosed a multilayer device that reflects at least a portion of electromagnetic radiation received thereat, when in operation, characterized in that the multilayer device includes: an optical reflecting arrangement (102) that reflects, according to a first reflection coefficient, electromagnetic radiation having a wavelength in a range of 230 nanometre (nm) to 800 nm; and a microwave reflecting arrangement (104) that reflects, according to a second reflection coefficient, electromagnetic radiation having a wavelength in a range of 30 millimetre (mm) to 1 mm, wherein the optical reflecting arrangement and the microwave reflecting arrangement are spatially collocated as one or more layers of the multilayer device.

## Description

### TECHNICAL FIELD

The present disclosure relates generally to multilayer devices that selectively reflect electromagnetic radiation, when in operation. Moreover, the present disclosure also relates to methods for (of) using aforesaid multilayer devices to reflect electromagnetic radiation in a selective manner. The electromagnetic radiation, for example, has a wavelength that is included in optical and microwave wavelength regimes.

### BACKGROUND

Providing a reflection of electromagnetic radiation from a given object is important for many use applications. For example, a relatively higher reflection coefficient of a given object potentially enables the given object to be used as a target when making distance measurements using directed electromagnetic radiation beams reflected from the given object, such as in range finding and inertial measurements. Moreover, highly reflective surfaces are potentially used to distinguish objects from their surroundings, enabling the objects to function as spatial guides or position markers.

It is generally known that electromagnetic radiation is a self-propagating energy wave in space and/or through matter. Electromagnetic radiation has an electric field component and a magnetic field component, wherein the components are often visualized to oscillate in phase and in planes that mutually perpendicular to each other and to a direction of propagation of the electromagnetic radiation. Electromagnetic radiation is generally classified according to its frequency, wherein the electromagnetic radiation includes (in an order of increasing frequency): radio waves, microwaves, terahertz radiation, infrared radiation, visible light, ultraviolet radiation, and so forth. Electromagnetic radiation carries energy, which may be imparted to a given object when the electromagnetic radiation interacts with matter of the given object. A familiar form of electromagnetic radiation is humanly-perceivable light radiation, that has a wavelength range of approximately 400 nanometre (nm) to 700 nm.

Known devices contemporarily use lasers for generating directed electromagnetic radiation beams in visible and infrared electromagnetic radiation spectrums. A laser is a device that emits electromagnetic radiation through a process referred to a "Light Amplification by Stimulated Emission of Radiation*"* (LASER). Electromagnetic radiation from such lasers is coherent and nearly monochromatic. As a result of these properties of coherence and monochromaticity, the laser can provide an intense beam of electromagnetic radiation power or energy per unit area and/or per solid angle, to the surface region of an object onto which the intense beam impinges.

Another existing known device uses multilayer dielectric reflectors to partition portions of the electromagnetic spectrum, for purposes of reflection and transmission of electromagnetic radiation. The multilayer dielectric reflectors typically comprise multiple layers of at least two mutually different materials arranged in optical stacks. A thickness of individual layers employed can be carefully adjusted to provide a desired reflection of electromagnetic radiation.

However, a problem arising is that many potential use applications require a robust, inexpensive and compact device that selectively reflects electromagnetic radiation at various radiation wavelength ranges. Known types of reflectors do not impart such a high degree of functionality.

Therefore, in light of the foregoing discussion, there exists a need to address the aforementioned drawbacks arising in existing known approaches for selectively transmitting and/or reflecting electromagnetic radiation received at a multilayer device.

### SUMMARY

The present disclosure seeks to provide an improved multilayer device that selectively reflects electromagnetic radiation, when in operation.

According to a first aspect, the present disclosure provides a multilayer device that reflects at least a portion of electromagnetic radiation received thereat, when in operation, characterized in that the multilayer device includes:
- an optical reflecting arrangement that reflects, according to a first reflection coefficient, electromagnetic radiation having a wavelength in a range of 230 nanometre (nm) to 800 nm; and
- a microwave reflecting arrangement that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

The invention is of advantage in that the multilayer device, on account of its plurality of layers, is capable of exhibiting, when in operation, an improved selective reflection functionality, depending on an electromagnetic radiation wavelength employed, wherein such a multilayer construction of the device is capable of reducing its cost of manufacture, as well as providing a more compact and robust device.

Optionally, in the multilayer device, at least one of the first reflection coefficient and the second reflection coefficient are a function of at least one of:
(a) a polarization of the electromagnetic radiation received at the multilayer device; and
(b) an angle of receipt of the electromagnetic radiation received at the device relative to a reference angle associated with the multilayer device.

Optionally, in the multilayer device, the first reflection coefficient and the second reflection coefficient are greater than 0.4, optionally greater than 0.6, and more optionally greater than 0.7.

Optionally, in the multilayer device, the multilayer device comprises a substrate including at least one dielectric glass slab that transmits and/or reflects the electromagnetic radiation received at the multilayer device.

Optionally, in the multilayer device, the dielectric glass slab comprises:
a front side;
a reflective surface, wherein the reflective surface of the substrate is provided with a microwave transistor for use in modulating the
second reflection coefficient associated with the reflective surface; and
a rear side;
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

Optionally, in the multilayer device, the reflective surface is integrated in between the front side and the rear side of the dielectric glass slab.

Optionally, in the multilayer device, the conductivity of the reflective surface is modulated by temporally changing a conductivity of the microwave transistor using a PIN-diode modulator.

Optionally, in the multilayer device, the microwave transistor is surface mounted onto the substrate.

Optionally, in the multilayer device, the microwave transistor is integrated into the substrate.

According to a second aspect, there is provided a method for (of) using a multilayer device that reflects at least a portion of electromagnetic radiation received thereat, when in operation, characterized in that the method includes:
- using an optical reflecting arrangement that reflects, according to a first reflection coefficient, electromagnetic radiation having a wavelength in a range of 230 nanometre (nm) to 800 nm; and
- using a microwave reflecting arrangement that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

Optionally, the method includes arranging for the at least one of the first reflection coefficient and the second reflection coefficient to be a function of at least one of:
(a) a polarization of the electromagnetic radiation received at the multilayer device; and
(b) an angle of receipt of the electromagnetic radiation received at the device relative to a reference angle associated with the multilayer device.

Optionally, in the method, the first reflection coefficient and the second reflection coefficient are greater than 0.4, optionally greater than 0.6, and more optionally greater than 0.7.

Optionally, the method includes arranging for the multilayer device to comprise a substrate including at least one dielectric glass slab that transmits and/or reflects the electromagnetic radiation received at the multilayer device.

Optionally, the method includes arranging for the dielectric glass slab to comprise:
a front side;
a reflective surface, wherein the reflective surface of the substrate is provided with a microwave transistor for use in modulating the second reflection coefficient associated with the reflective surface;
and
a rear side;
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

Optionally, the method includes integrating the reflective surface in between the front side and the rear side of the dielectric glass slab.

Optionally, the method includes arranging for the conductivity of the reflective surface to be modulated by temporally changing a conductivity of the microwave transistor using a PIN-diode modulator.

Optionally, the method includes arranging for the microwave transistor to be surface mounted onto the substrate.

Optionally, the method includes arranging for the microwave transistor to be integrated into the substrate.

Embodiments of the present disclosure substantially eliminate or at least partially address the aforementioned drawbacks arising in existing approaches for selectively transmitting and/or reflecting electromagnetic radiation received at a multilayer device.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a multilayer device in accordance with an embodiment of the present disclosure;
FIG. 2a is a schematic illustration of a multilayer device comprising a substrate in accordance with an embodiment of the present disclosure;
FIG. 2b is a schematic illustration of a multilayer device comprising a substrate in accordance with an embodiment of the present disclosure, together with a protective radome fabricated from a glass material; and
FIG. 3 is a flowchart illustrating steps of a method for (of) using a multilayer device that reflects at least a portion of electromagnetic radiation received thereat in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

The present disclosure provides a multilayer device that reflects at least a portion of electromagnetic radiation received thereat, when in operation, characterized in that the multilayer device includes:
- an optical reflecting arrangement that reflects, according to a first reflection coefficient, electromagnetic radiation having a wavelength in a range of 230 nanometre (nm) to 800 nm; and
- a microwave reflecting arrangement that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

The present multilayer device thus transmits and/or reflects electromagnetic radiation received thereat selectively in two different wavelengths. The present multilayer device thus provides a higher degree of visibility than has hitherto been feasible. The present multilayer device is optionally switched by modulating a conductivity of the reflective structure to provide reflection at microwave frequencies. The present multilayer device optionally receives a distinguishing reflection at both specific visual optical frequencies and millimetric microwave frequencies at the same time for increasing the visibility of a target.

Electromagnetic waves are formed when an electric field couples with a magnetic field. The magnetic field and the electric field of an electromagnetic wave are perpendicular to each other and to direction of the electromagnetic wave. In an embodiment, the multilayer device obtains/receives the electromagnetic radiation from sunlight, a transmitting device or a point source. In an embodiment, the sunlight is a form of electromagnetic energy. In an embodiment, the transmitting device is an antenna on a radio transmitter. In an embodiment, the point source is a light bulb.

In an embodiment, the present multilayer device is optionally implemented as a part of clothing, protective vest, etc. worn by humans, for example personnel. The present multilayer device is optionally implemented in lane markers, road barrier markers, sign posts and at road construction sites for providing reflections in different wavelengths; such a use is potentially beneficial where autonomous self-drive vehicles are being employed, that require unambiguous and well-defined spatial markers for vehicle positioning and orientation purpose. The present multilayer device is optionally implemented in a vest design, a bollard design, a microwave and/or a light optical target design.

In an embodiment, the present multilayer device is implemented as a part of a vehicle radar system for increasing the capability of localization of the vehicle radar system. For example, if road barriers are equipped with both light and radio frequency (RF) reflectors, the vehicle that is implemented with the present multilayer device estimates its position starting from a bias estimation in a specific lane to a global estimation using a global occupancy grid map, for example.

In an embodiment, the present multilayer device is implemented as a part of a bollard with a sideways-angled reflector at top. The bollards that are implemented with the multilayer device are optionally used for guiding vehicles, for example driverless autonomous vehicles, and also used as safety vests for cyclists, pedestrians and such like. Such bollards, for example deployed in outdoor environments for a period of many years, for example along roadways, are beneficially robust and inexpensive, for example when they are susceptible to being replaced easily in an event of them sustaining collision damage from vehicles. Moreover, such bollards are potentially beneficially used as guide markers for guiding autonomous self-drive vehicles.

In an embodiment, the electromagnetic radiation is at least one of light rays, ultraviolet rays, radio waves or microwaves. In an embodiment, the optical reflecting arrangement comprises a mirror or an optical reflector. In another embodiment, the microwave reflecting arrangement comprises a mirror or a metal sheet. In an embodiment, the microwave reflecting arrangement comprises a microwave dielectric ceramic layer. The microwave dielectric ceramic layer may comprise an Aluminium (Aluminum) thin film that is coated on ceramic substrate. In an embodiment, the multilayer device comprises a polymeric multilayer mirror and polarizing films and a deposited dielectric mirror.

In an embodiment, the optical reflecting arrangement comprises optical materials with a variable index of refraction. In an embodiment, the index of refraction of the optical reflecting arrangement and the reflectivity and/ or transmissivity of the multilayer device are varied by applying an electric field across the optical reflecting arrangement. The optical reflecting arrangement comprises a plurality of electro-optic layers having the variable index of refraction, each of the electro-optic layers being addressed with a quadrature feed. In an embodiment, each layer of the optical reflecting arrangement is formed of an electro-optic material and each layer is driven independently. In an embodiment, the optical reflecting arrangement comprises Aluminium (Aluminum), Silver, mirror or metal mirrors.

The optical reflecting arrangement and the microwave reflecting arrangement are spatially collocated as one or more layers of the multilayer device.

The first reflection coefficient and the second reflection coefficient are parameters that describe an amount of the electromagnetic radiation that is reflected by a spatial impedance discontinuity in a transmission medium. The first reflection coefficient and the second reflection coefficient are equal to a ratio of an amplitude of a reflected wave to an incident wave, with each expressed as phasors. For example, the first reflection coefficient and the second reflection coefficient are used in optics to calculate an amount of light that is reflected from a surface with a different index of refraction, such as a glass surface, or in an electrical transmission line to calculate an amount of the electromagnetic wave that is reflected by an impedance. In an example embodiment, the reflection coefficients for optical radiation and microwave radiation are greater than surrounding structures, in use, so that the multilayer device/reflector is distinguished (namely contrasted) from ambient surroundings, for example especially at night time when visibility is potentially reduced (for example by mists and fogs). Optionally, the optical reflecting arrangement and the microwave reflecting arrangement are resonant in nature at specific radiation wavelengths to provide exceptionally high reflectivity at the specific radiation wavelengths. By "*high*" is meant in excess of 0.7 (i.e. 70%), for example at a wavelength of greater than 30 mm, and optionally having a reflectivity in excess of 0.7 (i.e. 70%) at a wavelength of greater than 1 mm.

The present device optionally includes a diffraction grating and one or more prismatic components, for example a plurality of prismatic components. The diffraction grating comprises an optical component with a periodic structure that splits and diffracts the electromagnetic radiation into several electromagnetic beams in different directions. The directions of these electromagnetic beams depend on a periodic spacing of grating and a wavelength of the electromagnetic radiation, so that the grating acts as a wavelength-dependent dispersive element.

The prismatic component comprises a substantially transparent body (for example, with a radiation transmission greater than 90%) with three rectangular plane faces, or sides, and two equal and parallel triangular ends or bases, used to refract or disperse a beam of the electromagnetic radiation. The beam of electromagnetic radiation projected through one face is emitted in a different direction through another face. The electromagnetic radiation is emitted in a desired direction by providing a proper angle between prism faces. Such prismatic components can, for example, be implemented as a surface array formed on a suitable su bstrate.

According to an embodiment, at least one of the first reflection coefficient and the second reflection coefficient is a function of at least one of:
(a) a polarization of the electromagnetic radiation received at the multilayer device; and
(b) an angle of receipt of the electromagnetic radiation received at the device relative to a reference angle associated with the multilayer device.

Thus, interrogating radiation directed towards the present multilayer device can have a temporally switched polarization, wherein the present multilayer device is distinguishable from its surrounds by way of a unique manner in which radiation is selectively reflected from the present multilayer device depending upon polarization.

In an embodiment, as aforementioned, the reflectivity of the present multilayer device to electromagnetic radiation that is incident thereupon depends on an angle of incidence, a polarization angle of the electromagnetic radiation, and electromagnetic properties of materials forming a boundary surface in the present multilayer device. The angle of incidence, the polarization of the electromagnetic radiation, and the electromagnetic properties of materials may change with the wavelength of the electromagnetic radiation.

A polarization is a property applying to transverse electromagnetic waves that specify a geometrical orientation of its oscillations. The polarization of the electromagnetic radiation refers to a direction of the electric field.

In an embodiment, the polarization of the electromagnetic radiation is optionally a linear polarization, a circular polarization or an elliptical polarization. In the linear polarization, the electromagnetic fields oscillate in a single direction. In the circular or elliptical polarization, the electromagnetic fields rotate at a constant rate in a plane as the electromagnetic radiation/wave travels. In an embodiment, the electromagnetic fields rotate at two possible directions during polarization. For example, if the electromagnetic fields rotate in a clockwise direction with respect to the direction of electromagnetic wave travel, then it is called as right circular polarization. If the electromagnetic fields rotate in an anti-clockwise direction with respect to the direction of electromagnetic wave travel, then it is called "left circular polarization". In an embodiment, an effective refractive index is changed based on an angle of incidence that affects reflection of the electromagnetic radiation.

According to another embodiment, the first reflection coefficient and the second reflection coefficient are greater than 0.4, optionally greater than 0.6, and more optionally greater than 0.7. In an example embodiment, the first reflection coefficient and the second reflection coefficient are in a range of 0.4 to 1.0.

According to yet another embodiment, the multilayer device comprises a substrate including at least one dielectric glass slab that transmits and/or reflects the electromagnetic radiation received at the multilayer device.

In an embodiment, the substrate is a glass-based substrate that is coated with a polymer layer. The polymer layer optionally comprises a polymer surface. The polymer layer optionally includes any suitably flexible polymer material that is capable of being secured to a surface of the glass-based substrate. In an embodiment, the polymer layer covers an entire surface of the glass-based substrate. In an embodiment, the polymer materials optionally include, but are not limited to, a polar elastomer, a polyimide, a polycarbonate, a polyvinybutyral, a poly(meth)acryolate. The polymer layer is optionally provided in any suitable thickness. The polymer layer optionally comprises a laminate substrate to protect the glass-based substrate. The polymer layer optionally maintains an integrity of an entire laminate substrate if a mechanical failure occurs in the glass-based substrate. In an embodiment, the polymer layer is disposed on the glass-based substrate to increase mechanical robustness of the glass-based substrate. The polymer layer may be applied to the surface of the glass-based substrate by any suitable process.

The glass-based substrate optionally comprises an optical transmission of at least about 70%, at least about 80%, or at least about 90%, measured over a wavelength range of 400 nm to 800 nm. Optionally, the glass-based substrate comprises a haze of at most about 1%, at most about 0.5%, at most about 0.2%, or at most about 0.1%, measured using a Byk-Gardner Haze-Gard LE04 Haze Meter.

Optionally, the glass-based substrate comprises a surface roughness of at most about 10 nm, at most about 5 nm, at most about 2 nm, at most about 1 nm, or at most about 0.5 nm, wherein the surface roughness is Ra surface roughness measured over an area of 100 µ 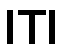 x 100 µ 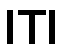 . Optionally, the glass-based substrate comprises a thermal capability of at least about 200 °C, at least about 400 °C, at least about 500 °C, or at least about 700 °C. Optionally, the glass-based substrate comprises a dimensional stability of at most about 20 µ 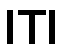 , at most about 10 µ 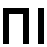 , or at most about 1 µ 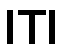 . The dimensional stability is the dimensional change or distortion upon heating the glass-based substrate to a processing temperature and then returning it to room temperature.

According to yet another embodiment, the dielectric glass slab comprises:
a front side;
a reflective surface, wherein the reflective surface of the substrate is provided with a microwave transistor for use in modulating the second reflection coefficient associated with the reflective surface; and
a rear side;
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

The present multilayer device includes a substrate including at least one dielectric glass slab that transmits and/or reflects the electromagnetic radiation received at the multilayer device. In an embodiment, the at least one dielectric glass slab functions based on an interference of the light reflected from different layers of the dielectric glass slab.

In an embodiment, the microwave radiation has a wavelength of less than 10 mm wavelength. The wavelength is calculated using the formula of Lambda = c/frequency, wherein Lambda is a wavelength, c is velocity of light (3.0 x 10⁸ m/sec) and the frequency is a frequency of the electromagnetic radiation involved.

In an embodiment, a thickness of each individual layer (e.g. the front side, the rear side, and the reflective surface) is selected to obtain a desired reflection band profile. In an embodiment, optical thicknesses are typically selected to be quarter-wavelength long, that is, nHIH = nLIL = λ0/4 at an operating wavelength λ0.

In an embodiment, the front side and the rear side of the at least one dielectric glass slab comprises high refractive index layers. By "*high*" is meant having a reflectivity in excess of 0.7 (i.e. 70%) at a wavelength of greater than 30 mm, and optionally having a reflectivity in excess of 0.7 (i.e. 70%) at a wavelength of greater than 1 mm. The high refractive index layers comprise at least one of (i) titanium dioxide (TiO2), (ii) zirconium dioxide (ZrO2), (iii) zinc selenide (ZnSe), or (iv) zinc sulfide (ZnS). In an embodiment, the thicknesses of the high-index layers (i.e. the front side, the reflective surface, and the rear side) are selected, such that path-length differences for reflections from different high-index layers are integer multiples of the wavelength for which the at least one dielectric glass slab is designed.

According to yet another embodiment, the reflective surface is integrated in between the front side and the rear side of the dielectric glass slab. In an embodiment, the reflective surface is a microwave reflective surface.

According to yet another embodiment, the conductivity of the reflective surface is modulated by temporally changing a conductivity of the microwave transistor using a PIN-diode modulator.

Optionally, the conductivity of the reflective surface is modulated by modulating an electrical conductivity of layers of dielectric material. Optionally, the substrate is temporally modulated when in operation, thereby providing a high degree of device visibility.

In an embodiment, the microwave transistor is a Field Effect Transistor (FET). The Field Effect Transistor (FET) is a three terminal device capable of both microwave amplification and switching. In an embodiment, the microwave transistor is a bipolar junction transistor (BJT) that includes three doped semiconductor regions such as a base, a collector and an emitter separated by two p-n Junctions. The conductivity of the microwave transistor is modulated using the PIN-diode modulator. The PIN-diode modulator provides an ideal way for amplitude and pulse modulation of microwave signal through a wide range of frequencies. The PIN-diode modulator includes PIN diodes that are used as a switch in a wave-guide cavity. In an embodiment, the modulation is applied to a PIN diode to switch on and off signals passing through the wave-guide cavity.

The PIN-diode is a silicon junction diode whose P and N trace regions are separated by a layer of intrinsic (I) semiconductor (silicon). The PIN diodes are mounted as shunt elements between an RF transmission path and ground. In an embodiment, the RF transmission path includes a characteristic impedance of 50 ohms. When the PIN-diodes are forward-biased an equivalent diode, their dynamic resistance is about 30 ohms and most of the RF energy is absorbed by the PIN-diodes instead of propagating down the 50-ohm transmission path. However, when the diodes are reverse- or back-biased, the equivalent diode resistance is in the order of thousands of ohms and the microwave currents are capable of flowing down the transmission path because diode resistance compared to the 50-ohm path impedance is negligible.

According to yet another embodiment, the microwave transistor is surface mounted onto the substrate.

According to yet another embodiment, the microwave transistor is integrated into the substrate.

The present disclosure provides a method for (of) using a multilayer device that reflects at least a portion of electromagnetic radiation received thereat, when in operation, characterized in that the method includes:
- using an optical reflecting arrangement that reflects, according to a first reflection coefficient, electromagnetic radiation having a wavelength in a range of 230 nanometre (nm) to 800 nm; and
- using a microwave reflecting arrangement that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

According to an embodiment, the method includes arranging for the at least one of the first reflection coefficient and the second reflection coefficient to be a function of at least one of:
(a) a polarization of the electromagnetic radiation received at the multilayer device; and
(b) an angle of receipt of the electromagnetic radiation received at the device relative to a reference angle associated with the multilayer device.

According to another embodiment, the first reflection coefficient and the second reflection coefficient are greater than 0.4, optionally greater than 0.6, and more optionally greater than 0.7.

According to yet another embodiment, the method includes arranging for the multilayer device to comprise a substrate including at least one dielectric glass slab that transmits and/or reflects the electromagnetic radiation received at the multilayer device.

According to yet another embodiment, the method includes arranging for the dielectric glass slab to comprise:
a front side;
a reflective surface, wherein the reflective surface of the substrate is provided with a microwave transistor for use in modulating the second reflection coefficient associated with the reflective surface;
and
a rear side;
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

According to yet another embodiment, the method includes integrating the reflective surface in between the front side and the rear side of the dielectric glass slab.

According to yet another embodiment, the method includes arranging for the conductivity of the reflective surface to be modulated by temporally changing a conductivity of the microwave transistor using a PIN-diode modulator.

According to yet another embodiment, the method includes arranging for the microwave transistor to be surface mounted onto the substrate.

According to yet another embodiment, the method includes arranging for the microwave transistor to be integrated into the substrate.

The advantages of the present method are thus identical to those disclosed above in connection with the present multilayer device and the embodiments listed above in connection with the present multilayer device apply *mutatis mutandis* to the method.

Embodiments of the present disclosure beneficially provide a higher degree of visibility than known types of reflectors or targets. Embodiments of the present disclosure beneficially receive a distinguishing reflection at both specific visual optical frequencies and millimetric microwave frequencies at the same time for increasing the visibility of a target. Embodiments of the present disclosure are optionally implemented as a part of clothing, protective vest etc. worn by humans. Embodiments of the present disclosure may be implemented in lane markers, road barrier markers, sign posts and at road construction sites for providing reflections in different wavelengths. Embodiments of the present disclosure are beneficially used in vest design, bollard design, microwave/light optical target design. Embodiments of the present disclosure are beneficially implemented in a vest design, a bollard design, a microwave and/or a light optical target design. Embodiments of the present disclosure are beneficially implemented as a part of a vehicle radar system for increasing the capability of localization of the vehicle radar system. Embodiments of the present disclosure are beneficially implemented as a part of a bollard with a sideways-angled reflector at top. The bollards that are implemented with the multilayer device are optionally used for guiding vehicles, for example, driverless autonomous vehicles, and also used as safety vests for cyclists, pedestrians and such like.

### DETAILED DESCRIPTION OF THE DRAWINGS

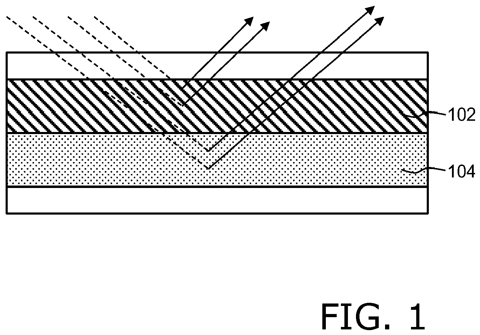

FIG. 1 is a schematic illustration of a multilayer device in accordance with an embodiment of the present disclosure. The multilayer device includes a plurality of parts, namely an optical reflecting arrangement **102** and a microwave reflecting arrangement **104.** Functions of these parts are as has been described above.

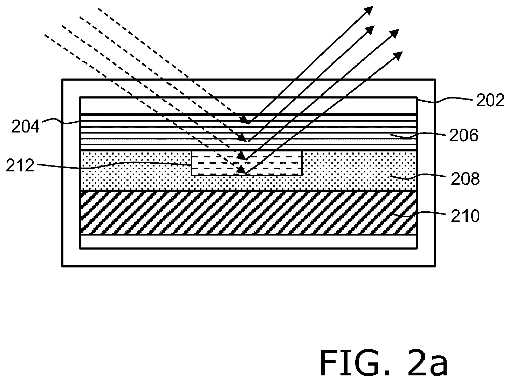

FIG. 2a is a schematic illustration of a multilayer device comprising a substrate **202** in accordance with an embodiment of the present disclosure. The substrate **202** includes at least one dielectric glass slab **204** for transmitting and/or reflecting the electromagnetic radiation received at the multilayer device. The dielectric glass slab **204** includes a front side **206,** a reflective surface **208** and a rear side **210.** The reflective surface **208** optionally includes a microwave transistor **212.** Functions of these parts are as has been described above.

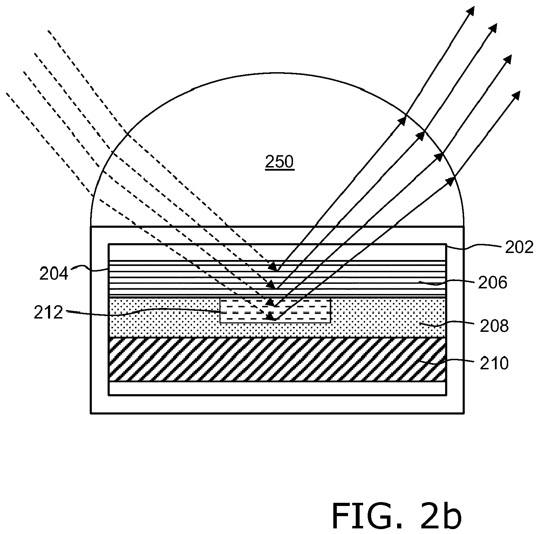

FIG. 2b is a schematic illustration of the multilayer device of FIG. 2a that is further provided with a radome **250** to protect the substrate **202.** The radome **250** is beneficially fabricated from a dielectric glass material, and serves to provide protection for the substrate **202,** for example to protect against physical impact damage, abrasion or corrosion.

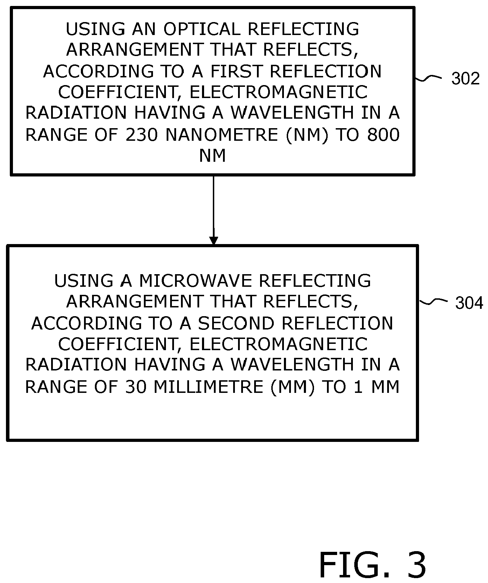

FIG. 3 is a flowchart illustrating steps of a method for (of) using a multilayer device that reflects at least a portion of electromagnetic radiation received thereat in accordance with an embodiment of the present disclosure. At a step **302,** an optical reflecting arrangement reflects, according to a first reflection coefficient, electromagnetic radiation having a wavelength in a range of 230 nanometre (nm) to 800 nm. At a step **304,** a microwave reflecting arrangement reflects, according to a second reflection coefficient, electromagnetic radiation having a wavelength in a range of 30 millimetre (mm) to 1 mm. The optical reflecting arrangement and the microwave reflecting arrangement are spatially collocated as one or more layers of the multilayer device.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A multilayer device that reflects at least a portion of electromagnetic radiation received thereat, when in operation, **characterized in that** the multilayer device includes:
- an optical reflecting arrangement (102) that reflects, according to a first reflection coefficient, electromagnetic radiation having a wavelength in a range of 230 nanometre (nm) to 800 nm; and
- a microwave reflecting arrangement (104) that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

2. A multilayer device of claim 1, **characterized in that** the device is provided with a radome (250) that is transmissive to electromagnetic radiation to which the optical reflecting arrangement and the microwave reflecting arrangement are reflective, wherein the radome provides protection to the device, and wherein the radome is fabricated from a glass material.

3. A multilayer device of claim 1, **characterized in that** at least one of the first reflection coefficient and the second reflection coefficient are a function of at least one of:
(a) a polarization of the electromagnetic radiation received at the multilayer device; and
(b) an angle of receipt of the electromagnetic radiation received at the device relative to a reference angle associated with the multilayer device.

4. A multilayer device of claim 1, 2 or 3, **characterized in that** the first reflection coefficient and the second reflection coefficient are greater than 0.4, optionally greater than 0.6, and more optionally greater than 0.7.

5. A multilayer device of claim 1, 2, 3 or 4, **characterized in that** the multilayer device comprises a substrate (202) including at least one dielectric glass slab (204) that transmits and/or reflects the electromagnetic radiation received at the multilayer device.

6. A multilayer device of claim 5, **characterized in that** the dielectric glass slab (204) comprises:
a front side (206);
a reflective surface (208), wherein the reflective surface of the substrate is provided with a microwave transistor (212) for use in modulating the second reflection coefficient associated with the reflective surface; and
a rear side (210);
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

7. A multilayer device of claim 6, wherein the reflective surface (208) is integrated in between the front side (206) and the rear side (210) of the dielectric glass slab (204).

8. A multilayer device of claim 6, wherein the conductivity of the reflective surface is modulated by temporally changing a conductivity of the microwave transistor (212) using a PIN-diode modulator.

9. A method of using a multilayer device that reflects at least a portion of electromagnetic radiation received thereat, when in operation, **characterized in that** the method includes:
- using an optical reflecting arrangement (102) that reflects, according to a first reflection coefficient, electromagnetic radiation having a wavelength in a range of 230 nanometre (nm) to 800 nm; and
- using a microwave reflecting arrangement (104) that reflects, according to a second reflection coefficient, electromagnetic radiation having a wavelength in a range of 30 millimetre (mm) to 1 mm,
wherein the optical reflecting arrangement and the microwave reflecting arrangement are spatially collocated as one or more layers of the multilayer device.

10. A method of claim 9, **characterized in that** the method includes providing the device with a radome (250) that is transmissive to electromagnetic radiation to which the optical reflecting arrangement and the microwave reflecting arrangement are reflective, wherein the radome provides protection to the device, and wherein the radome is fabricated from a glass material.

11. A method of claim 9 or 10, **characterized in that** the method includes arranging for the at least one of the first reflection coefficient and the second reflection coefficient to be a function of at least one of:
(a) a polarization of the electromagnetic radiation received at the multilayer device; and
(b) an angle of receipt of the electromagnetic radiation received at the device relative to a reference angle associated with the multilayer device.

12. A method of claim 9 or 10 , **characterized in that** the first reflection coefficient and the second reflection coefficient are greater than 0.4, optionally greater than 0.6, and more optionally greater than 0.7.

13. A method of claim 9 ,10, 11 or 12, **characterized in that** the method includes arranging for the multilayer device to comprise a substrate (202) including at least one dielectric glass slab (204) that transmits and/or reflects the electromagnetic radiation received at the multilayer device.

14. A method of claim 13, **characterized in that** the method includes arranging for the dielectric glass slab (204) to comprise:
a front side (206);
a reflective surface (208), wherein the reflective surface of the substrate is provided with a microwave transistor (212) for use in modulating the second reflection coefficient associated with the reflective surface; and
a rear side (210);
wherein the substrate, when in operation, reflects incident radiation impinging upon it and provides (i) a first reflection having a wavelength in a range of 230 nanometre (nm) to 800 nm, and (ii) a second reflection having a wavelength that is less than 30 millimetre (mm) by modulating conductivity of the reflective surface.

15. A method of claim 14, **characterized in that** the method includes integrating the reflective surface (208) in between the front side (206) and the rear side (210) of the dielectric glass slab (204).

16. A method of claim 14, **characterized in that** the method includes arranging for the conductivity of the reflective surface to be modulated by temporally changing a conductivity of the microwave transistor (212) using a PIN-diode modulator.
